# FASCICULE DE BREVET EUROPEEN

(11) **EP 1 751 500 B1**
(45) Date de publication et mention de la délivrance du brevet: **25.08.2010**
(21) Numéro de dépôt: 05747817.4
(22) Date de dépôt: 25.04.2005
(51) Int. Cl.: G01C 22/02

(54) **COMPTEUR DE TOURS DE ROTATION DE PNEUMATIQUE**
UMDREHUNGSZÄHLER FÜR REIFEN
TYRE ROTATION COUNTER

(30) Priorité: 26.04.2004 FR 0404413
(43) Date de publication de la demande: 14.02.2007
(73) Titulaire: Societe de Technologie Michelin, 63000 Clermont-Ferrand (FR); Michelin Recherche et Technique S.A., 1763 Granges-Paccot (CH); Commissariat à l'Énergie Atomique et aux Énergies Alternatives, 75015 Paris (FR)
(72) Inventeur: ROBERT, Michel, F-63200 CELLULE (FR); PERRIER, Bernard, F-63100 CLERMONT-FERRAND (FR); JEANDEY, Christian, F-38120 SAINT-EGREVE (FR)
(74) Mandataire: Dequire, Philippe Jean-Marie Denis
(86) Numéro de dépôt international: PCT/EP2005/051831
(87) Numéro de publication internationale: WO 2005/103626

(56) Documents cités:
- EP-A- 0 829 382
- DE-A1- 3 937 966
- GB-A- 2 242 527
- US-A- 4 862 486
- US-A- 5 502 433
- US-B1- 6 438 193

## Description

La présente invention concerne un dispositif destiné à être porté par un pneumatique pour détecter les révolutions en roulage de celui-ci. Elle concerne également un pneumatique portant un tel dispositif.

Un véhicule automobile comporte en général un compteur kilométrique permettant de connaître la distance totale parcourue par ce véhicule. Ce compteur ne renseigne cependant pas sur la distance parcourue par chaque pneumatique du véhicule.

Par exemple, lorsqu'on change temporairement de pneumatiques (l'hiver lorsque l'on met des pneumatiques neige par exemple) ou lorsqu'on remplace de vieux pneumatiques usés, la distance affichée par le compteur kilométrique ne permet plus de connaître la distance réellement parcourue par les pneumatiques.

La seule indication concernant la distance parcourue par un pneumatique usagé est ainsi, usuellement, l'usure de sa bande de roulement.

Les manufacturiers de pneumatiques ont donc eu l'idée d'insérer un dispositif solidaire du pneumatique, à l'intérieur de celui-ci, et permettant de connaître la distance parcourue par ce pneumatique. De tels dispositifs existent déjà (voir par exemple le document US 4 862 486 A).

Parmi ces dispositifs, US5877679 présente un dispositif pour compter les tours de rotation d'un pneumatique sur un véhicule comprenant un boîtier rigide, des moyens de liaison destinés à relier mécaniquement le boîtier à la surface intérieure du pneumatique et un capteur destiné à générer un signal électrique à chaque tour de roue dans lequel les moyens de liaison comprennent au moins deux blocs de fixation décalés l'un de l'autre et le capteur est un capteur d'efforts disposé entre les deux blocs de fixation.

Les dispositifs existants présentent cependant une durée de vie limitée car ils consomment une quantité importante d'énergie et sont complexes.

L'invention a pour objet un dispositif similaire dans lequel le capteur est constitué d'un générateur de champ magnétique et d'un capteur sensible au champ magnétique solidaire du boîtier disposé en regard du générateur de champ magnétique, en ce que les moyens de liaison lient mécaniquement le boîtier à une première surface A et le générateur de champ magnétique à une seconde surface B, les deux surfaces A et B étant sensiblement coplanaires et décalées l'une de l'autre dans une direction D d'une distance L donnée, et en ce que ledit signal électrique est produit par les déplacements relatifs entre ledit capteur sensible au champ magnétique et ledit générateur de champ magnétique.

De préférence, le capteur sensible au champ magnétique est un capteur passif.

Ce dispositif est plus simple que les dispositifs existants, donc plus robuste.

Le capteur du dispositif, contrairement au capteur d'efforts précédent, n'a pas besoin d'énergie pour fonctionner. Cela permet au dispositif de l'invention d'avoir une plus grande autonomie que les dispositifs existants.

De façon optionnelle, le capteur passif du dispositif selon l'invention peut être une simple boucle de fil conducteur. Une tension électrique se crée alors dans la boucle par induction lorsqu'elle est soumise à une variation temporelle d'un flux magnétique. Un avantage de cette bobine est sa grande robustesse. Contrairement aux capteurs d'efforts ou autres précédemment utilisés dans l'état de la technique, qui sont des capteurs complexes et fragiles, une simple bobine de fil conducteur présente une grande résistance aux vibrations créées par le roulement sur la chaussée.

Selon un premier mode de réalisation préférentiel, les moyens de liaison sont tels qu'un déplacement relatif normal à la direction D des surfaces A et B entraîne un déplacement relatif des générateur de champ magnétique et capteur sensible au champ magnétique sensiblement normal à la direction D.

Les générateur de champ magnétique et capteur sensible au champ magnétique peuvent être disposés en regard selon une direction normale à la direction D.

Selon un premier exemple de réalisation, les moyens de liaison, le boîtier et le capteur sensible au champ magnétique peuvent avantageusement être disposés en forme de L.

Les moyens de liaison du boîtier et du capteur peuvent aussi comprendre une semelle souple avec une première face destinée à être liée de manière permanente à la surface du pneumatique et au moins un élément de liaison auquel est fixé le boîtier avec un écartement donné relativement à la semelle.

Le générateur de champ magnétique est alors avantageusement noyé dans la semelle.

De préférence, le boîtier, l'élément de liaison du boîtier et la semelle ont une forme générale en U.

Selon un second exemple de réalisation, les moyens de liaison du générateur de champ magnétique sont constitués d'un élément de liaison élastique, de forme allongée et arquée s'étendant dans la direction D entre la surface B et une zone du boîtier ou de l'élément de liaison du boîtier en regard de la surface A, le générateur de champ magnétique et le capteur sensible au champ magnétique étant disposés en regard entre les deux extrémités dudit élément de liaison du capteur.

Préférentiellement, les moyens de liaison comprennent une semelle souple reliant les surfaces A et B.

Ce dispositif a l'avantage de permettre d'écarter les surfaces A et B l'une de l'autre et ainsi d'augmenter l'amplitude des mouvements relatifs entre les deux éléments du capteur.

Selon un troisième exemple de réalisation, les moyens de liaison du générateur de champ magnétique sont constitués d'un élément de liaison élastique, de forme allongée et arquée s'étendant dans la direction D entre la surface B et une surface B' disposée au-delà de la surface A, le générateur de champ magnétique et le capteur sensible au champ magnétique étant disposés en regard entre les deux extrémités dudit élément de liaison du générateur de champ magnétique.

Préférentiellement, les moyens de liaison comprennent une semelle souple reliant les surfaces A, B et B'.

Ce dispositif permet dans certaines conditions, par exemple lorsqu'il est disposé à la surface intérieure du pneumatique sous le sommet, d'augmenter la sensibilité du dispositif de comptage des rotations du pneumatique. Le dispositif est alors de préférence disposé avec la direction D orienté circonférentiellement. On peut aussi disposer ce dispositif sur la surface du flanc toujours avec une orientation circonférentielle.

Les générateur de champ magnétique et capteur sensible au champ magnétique peuvent aussi être disposés en regard selon une direction parallèle à la direction D.

Selon un quatrième exemple de réalisation, les moyens de liaison comprennent un élément de liaison du boîtier écartant ledit boîtier de la surface A d'une hauteur donnée, et un élément de liaison du générateur de champ magnétique écartant ledit générateur de champ magnétique de la surface B d'une hauteur donnée et dans lequel le capteur sensible au champ magnétique est solidaire du boîtier et disposé à une hauteur relativement à la surface A sensiblement identique à la hauteur séparant le générateur de champ magnétique de la surface B.

Un tel dispositif peut préférentiellement être disposé à proximité des bourrelets du pneumatique avec une orientation D radiale.

Selon un second mode de réalisation, les moyens de liaison sont tels qu'un déplacement relatif normal à la direction D des surfaces A et B entraîne un déplacement relatif des capteur sensible au champ magnétique et générateur de champ magnétique sensiblement parallèle à la direction D.

Selon un cinquième exemple de réalisation correspondant à ce second mode de réalisation, les moyens de liaison du générateur de champ magnétique peuvent comprendre deux branches allongées avec un point de liaison en forme de L, telles que le générateur est disposé sensiblement audit point de liaison, la première branche s'étend du point de liaison jusqu'à une zone adjacente sensiblement à la surface A et la seconde branche s'étend du point de liaison jusqu'à la surface B.

Les moyens de liaison comprennent avantageusement une semelle souple reliant les surfaces A et B.

Un tel dispositif peut préférentiellement être disposé à proximité des bourrelets du pneumatique avec une orientation D radiale.

La distance L entre la surface A et la surface B est avantageusement supérieure à 20 mm pour donner une bonne sensibilité au dispositif. Dans le cas de pneumatique pour véhicules poids lourds, cette distance peut être de l'ordre de 30 mm.

La distance H, écartement entre le générateur de champ magnétique et le capteur passif, peut être comprise entre 10 et 15 mm (à l'état libre, soit avant le montage du dispositif à la surface du pneumatique).

Le générateur de champ magnétique peut être un aimant permanent ou un ensemble d'aimants permanents. Ce générateur peut aussi être constitué de mélanges caoutchouteux comportant des particules magnétiques. Le ou les aimants permanents sont de préférence de type samarium-cobalt pour garantir une bonne tenue en température.

L'invention a aussi pour objet un pneumatique portant un dispositif de comptage des rotations précédent.

Le dispositif est disposé de préférence sur la surface interne du pneumatique. La surface A du dispositif peut avantageusement être disposée sur la surface intérieure de l'un des bourrelets du pneumatique. La surface B est alors avantageusement disposée sensiblement radialement extérieurement relativement à la surface A. La distance E entre la surface A et l'extrémité radiale intérieure de la surface intérieure du pneumatique peut être supérieure à 50 mm.

On constate en effet, avec cette disposition, que la surface A n'a que de très faibles variations de profil lors du passage dans l'aire de contact alors que la surface B commence à avoir des variations notables, supérieures à 1 mm pour le cas de pneumatiques poids lourds. En conséquence, les variations de distance entre le générateur de champ magnétique et le capteur passif sont aussi de même amplitude et la sensibilité du dispositif est excellente.

Le dispositif selon l'invention peut aussi être disposé sur la surface intérieure du sommet du pneumatique de telle sorte que les surfaces A et B sont orientées sensiblement circonférentiellement. Les variations de position relatives des surfaces A et B, et du générateur de champ magnétique et du capteur passif sont alors liées à l'aplatissement du sommet du pneumatique lors du passage dans l'aire de contact.

Le dispositif selon l'invention peut encore être disposé sur la surface externe du pneumatique, à une hauteur radiale supérieure à la hauteur des crochets de la jante sur laquelle le pneumatique doit être monté pour éviter tout problème au montage ou en roulage. Dans ce cas, la maintenance du dispositif est facilitée. Il est alors préférable de prévoir un dispositif de protection pour éviter son endommagement.

Le dispositif selon l'invention peut en outre comporter l'une ou plusieurs des caractéristiques suivantes :
- le dispositif peut comporter un interpréteur de signaux qui produit une impulsion chaque fois qu'il a détecté au moins un cycle des signaux produits par le capteur passif ;
- l'interpréteur du dispositif peut comporter un comparateur ;
- l'interpréteur du dispositif peut comporter des moyens de filtrage des signaux produits par le capteur passif ;
- l'interpréteur du dispositif peut comporter des moyens d'amplification de signaux ;
- le dispositif peut comporter un moyen de comptage relié à l'interpréteur ;
- le moyen de comptage du dispositif peut comporter un compteur qui, chaque fois qu'il a reçu un nombre prédéterminé d'impulsions de la part de l'interpréteur, transmet une impulsion à un microcontrôleur comportant des moyens de stockage du nombre d'impulsions reçu du compteur ;
- le dispositif peut comporter un dispositif de transmission vers l'extérieur de données caractéristiques du nombre d'impulsions stocké par le microcontrôleur.
- le dispositif peut comporter un système autonome d'alimentation électrique des composants électronique, par exemple une pile.
- le boîtier peut comporter, en plus du capteur passif, l'ensemble des moyens d'alimentation électrique et de traitement des signaux.

L'invention concerne également un dispositif de comptage des rotations d'un objet qui subit une déformation au cours d'une rotation, comprenant deux parties soumises à un mouvement relatif sous l'effet de la déformation, **caractérisé en ce que** la première partie comporte un générateur de champ magnétique tandis que la seconde partie comporte un capteur sensible audit champ magnétique.

Les signaux générés par le capteur du fait du mouvement relatif entre la première partie et la seconde partie sont ainsi liés à la déformation de l'objet au cours de la rotation et permettent donc facilement de dénombrer les rotations.

Le capteur peut être réalisé par un capteur passif, par exemple au moyen d'une simple spire, ce qui permet d'éviter la nécessité d'une alimentation électrique pour le capteur.

De même, le générateur de champ magnétique peut être un aimant, ce qui permet d'éviter également une alimentation électrique au niveau du générateur.

Lorsque l'une des parties est reliée à l'objet par un bras (ou membre), ce dernier peut éventuellement avoir une certaine élasticité. Cette élasticité permet d'une part d'éviter les risques de rupture du bras, conférant ainsi une bonne durabilité du fonctionnement, et participe d'autre part à la définition d'une position de référence autour de laquelle la partie concernée peut se déplacer. Même si cette élasticité peut induire un léger déphasage entre le mouvement relatif du capteur et du générateur de champ magnétique d'une part et la déformation de l'objet d'autre part, la fréquence du mouvement relatif du capteur et du générateur de champ magnétique correspond toujours à celle des déformations générées par la rotation de l'objet et peut donc toujours servir de base au dénombrement de ces rotations.

En pratique, le dispositif peut comporter un interpréteur qui produit une impulsion chaque fois qu'il a détecté au moins un cycle des signaux produits par le capteur. L'interpréteur comporte par exemple un comparateur, qui permet de déterminer les cycles de manière particulièrement simple et, par conséquent, peu consommatrice d'énergie, et/ou des moyens d'amplification des signaux, ce qui est particulièrement intéressant lorsque l'on utilise un capteur passif.

Le dispositif peut également comprendre un compteur qui, chaque fois qu'il a reçu un nombre prédéterminé d'impulsions de la part de l'interpréteur, transmet une impulsion à un microcontrôleur comportant des moyens de stockage du nombre d'impulsions reçues du compteur. Le contrôleur ne peut donc fonctionner que pendant une proportion minime du temps d'utilisation, ce qui permet également de réduire la consommation électrique du dispositif.

Le dispositif peut en outre comporter des moyens de transmission vers l'extérieur de données caractéristiques du nombre d'impulsions stocké par le microcontrôleur. Le nombre d'impulsions stockées par le microcontrôleur, qui est naturellement indicatif du nombre de rotations de l'objet, peut ainsi être relevé sans contact par un autre dispositif.

L'alimentation électrique du dispositif peut être réalisée par un système autonome d'alimentation électrique des composants électroniques (par exemple une pile), notamment grâce à la faible consommation énergétique du dispositif grâce par exemple à une partie au moins des caractéristiques précitées, ce qui permet d'utiliser le dispositif même dans les environnements où aucune alimentation électrique extérieure n'est disponible.

L'invention sera mieux comprise à la lecture de la description qui va suivre, donnée uniquement à titre d'exemple et faite en se référant aux dessins annexés dans lesquels :
- la figure 1 est une vue de côté d'un premier exemple de réalisation d'un dispositif selon l'invention ;
- la figure 2 est une coupe CC tel qu'indiqué à la figure 1 du premier exemple de dispositif de l'invention ;
- la figure 3 est une vue de dessus du dispositif de la figure 1 ;
- la figure 4 présente l'évolution du profil de la surface intérieure d'un pneumatique pour les azimuts 0° (opposé de l'aire de contact) et 180° (centre de l'aire de contact) ;
- la figure 5 est une vue en coupe méridienne d'un pneumatique muni, de façon illustrative, de plusieurs dispositifs selon l'invention disposé sur ses surfaces interne et externe ;
- la figure 6 est un schéma fonctionnel d'un dispositif selon l'invention ;
- la figure 7 est un graphique représentant les signaux temporels produits par le capteur d'un dispositif selon l'invention ;
- la figure 8 est une vue de côté d'un second exemple de réalisation d'un dispositif selon l'invention ;
- la figure 9 est une vue de côté d'un troisième exemple de réalisation d'un dispositif selon l'invention ;
- la figure 10 est une vue de côté d'un quatrième exemple de réalisation d'un dispositif selon l'invention ; et
- la figure 11 est une vue de côté d'un cinquième exemple de réalisation d'un dispositif selon l'invention.

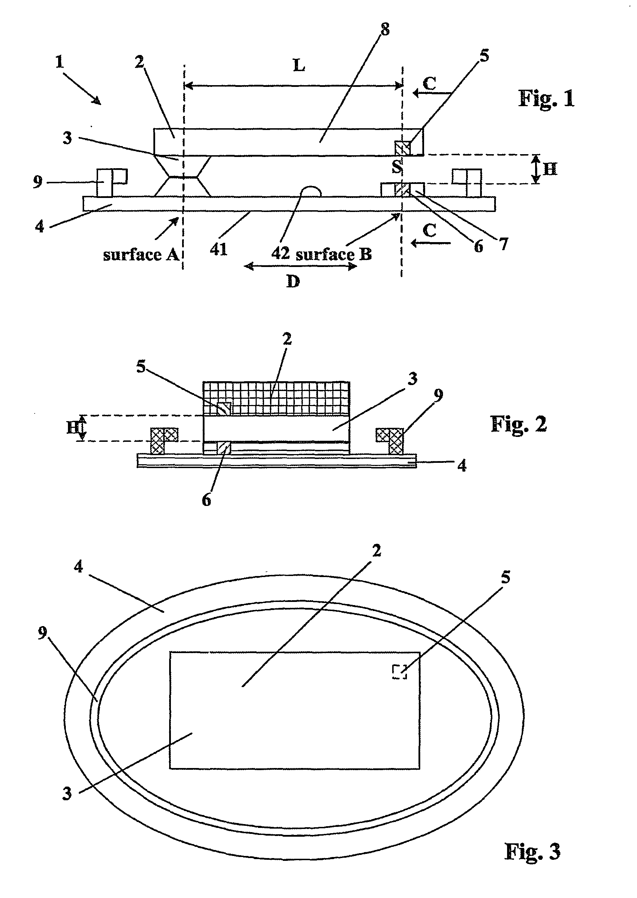

Les figures 1, 2 et 3 présentent en vue de côté, en coupe et en vue de dessus un premier exemple de réalisation d'un dispositif 1 selon l'invention. Ce dispositif comprend principalement un boîtier rigide 2, des moyens de liaison 3, 4 et 7, et un capteur constitué d'un capteur passif 5 et d'un aimant 6.

Le boîtier 2 porte le capteur passif 5 ainsi que l'ensemble des moyens 8 d'alimentation électrique et de traitement des signaux.

Les moyens de liaison comportent une semelle 4, un élément de liaison 3 du boîtier 2 et un élément de liaison 7 de l'aimant 6. La semelle 4 a une première face 41 destinée à être liée de manière permanente à la surface du pneumatique et une seconde face 42. Cette semelle est avantageusement en matériau caoutchouteux souple pour lui permettre de suivre les déformations de la surface du pneumatique. L'élément de liaison 3 du boîtier 2 permet de solidariser mécaniquement le boîtier 2 et la semelle 4 de telle sorte que le boîtier suive tous les déplacements de la surface A, zone de la semelle adjacente à l'élément de liaison 3. Cet élément de liaison 3 peut être aussi en matériau caoutchouteux mais doit avoir une dureté sensiblement supérieure pour assurer ses fonctions de maintien et de solidarisation mécaniques. L'aimant 6 est noyé dans l'élément de liaison 7.

Le boîtier 2, l'élément de liaison 3 et la semelle 4 ont une forme générale de U. A l'extrémité de l'une des deux branches du U est disposé le capteur passif 5 et à l'autre l'aimant 6. Ces deux éléments constituent le capteur du dispositif et sont disposés en regard l'un de l'autre selon une direction normale à la direction D reliant les surfaces A et B. Le capteur est décalé de l'élément de liaison 3 d'une longueur L qui est supérieure à 20 mm et de l'ordre de 30 mm pour des pneumatiques poids lourd. L'aimant 6 et le capteur passif 5 sont séparés d'une distance H comprise entre 10 et 15 mm, à l'état libre. L'élément de liaison 7 place l'aimant 6 ici en saillie à l'extrémité de la semelle 4. Il peut aussi être noyé dans celle-ci. L'aimant 6 va pouvoir suivre tous les déplacements de la surface B de la semelle 4 et de la surface du pneumatique adjacente.

La semelle 4 comprend aussi un trottoir 9 destiné à recevoir et à fixer une coque de protection du dispositif lorsqu'il est disposé à la surface d'un pneumatique, ou lors des éventuelles opérations de rechapage de celui-ci. Une telle coque peut notamment être en matériau plastique renforcé de fibres de verre.

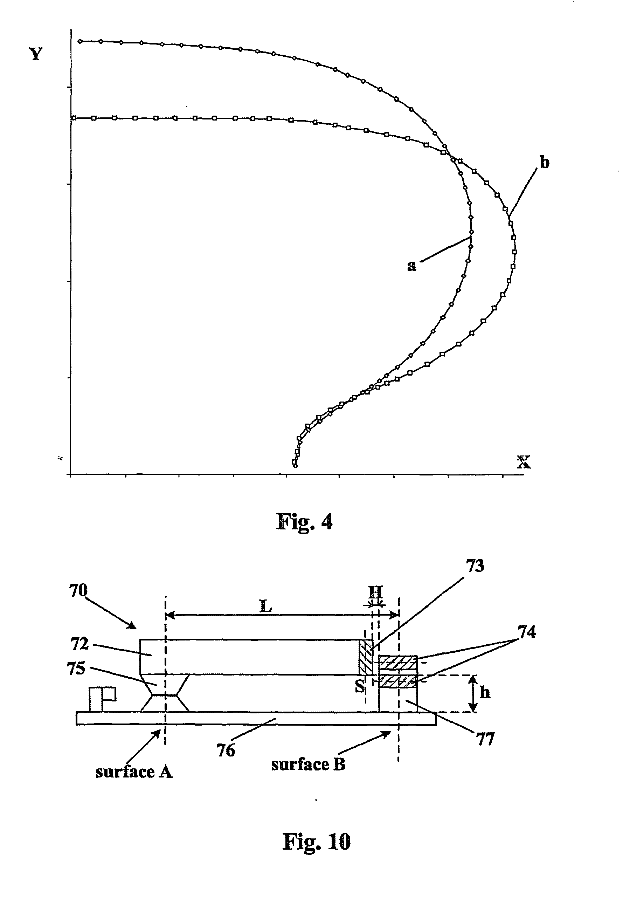

La figure 4 présente les évolutions du profil méridien de la surface intérieure d'un pneumatique poids lourd 315/80 R 22.5 pour des conditions données de charge et de pression pour les azimuts 0° (opposé de l'aire de contact - courbe a) et 180° (centre de l'aire de contact- courbe b).

On constate que dans toute la zone des bourrelets du pneumatique, zone à proximité de la tringle et en appui, du côté extérieur du pneumatique, contre le crochet de jante, il n'y a pratiquement pas de variation de ce profil lors du passage dans l'aire de contact. En revanche radialement extérieurement, on observe une augmentation croissante des écarts entre les deux profils représentés.

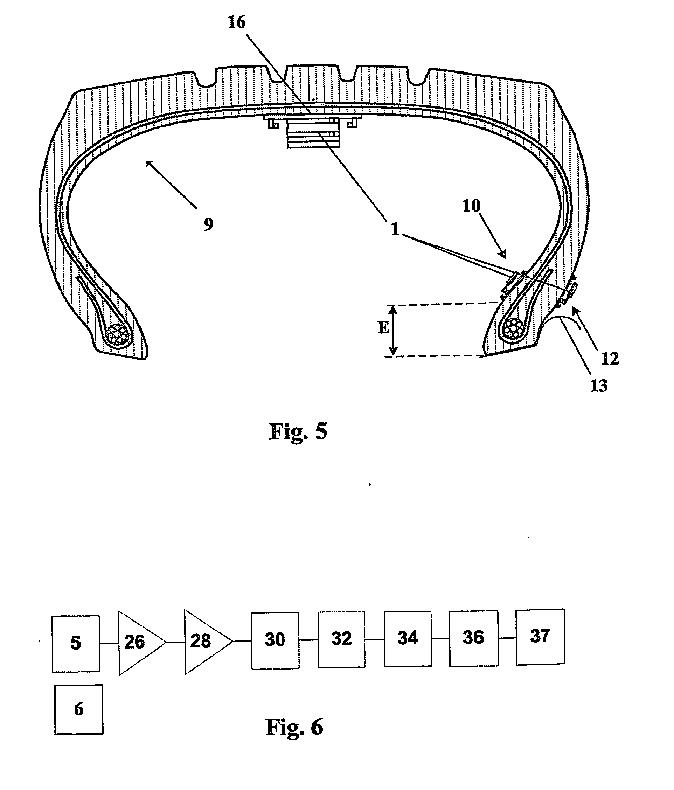

Une première position favorable d'implantation du dispositif selon l'invention est donc de placer la surface A adjacente à l'extrémité radialement extérieure de la zone des bourrelets du pneumatique pour que les déplacements de cette surface A et ainsi du boîtier et du capteur passif soient très réduits lors du roulage. La surface B est alors placée radialement extérieurement relativement à la surface A. C'est ce qui est représenté à la figure 5 pour le dispositif 1 dans la position de la zone 10.

Avec une distance L de l'ordre de 30 mm entre les centres des surfaces A et B, les variations de profil et ainsi de distance entre le capteur passif et l'aimant lors du passage dans l'aire de contact sont de l'ordre de 1 mm.

Le capteur passif 5 est avantageusement une bobine de direction de sensibilité (identique à l'axe de la bobine) orientée selon la direction S, normale à la direction D. L'aimant est placé aussi avec ses deux pôles orientés selon la direction S. Toute variation de distance entre l'aimant et la bobine va ainsi entraîner une variation du flux magnétique traversant la bobine et produit un signal proportionnel à cette variation selon la loi de Faraday-Lenz.

Le signal généré par la bobine est un signal périodique dont la fréquence est égale à la fréquence de rotation du pneumatique.

Le signal généré par la bobine est d'autant plus ample que les variations du flux magnétique traversant la bobine sont plus fortes et plus rapides : son amplitude dépend donc aussi de la vitesse de rotation de la bobine. Dans un mode de réalisation particulier, on intègre le signal pour retrouver la valeur du champ et s'affranchir de l'effet vitesse.

La figure 6 est un schéma fonctionnel d'un mode de réalisation particulier d'un dispositif selon l'invention. Le dispositif 1 est composé d'un capteur avec un capteur passif 5 (une bobine d'impédance 2.2 mH) et un aimant 6 de 100 mm³, d'un amplificateur 26 permettant d'augmenter les signaux produits par le capteur passif si nécessaire, d'un filtre 28 permettant de supprimer les composantes fréquentielles parasites et de rejeter les sources de champ magnétiques alternatives extérieures parasites (par exemple le 50 Hz du réseau EDF), d'un comparateur 30 qui génère un créneau à chaque tour du pneumatique. L'amplificateur 26, le filtre 28 et le comparateur 30 constituent un interpréteur de signaux. Le dispositif comprend en outre un compteur à N bits 32 qui stocke le nombre de tours réalisés par le pneumatique et qui, lorsqu'il est rempli (tous les 2^{N} tours) réveille un microcontrôleur 34 qui incrémente sa mémoire de un par exemple. Le compteur 32 et le microcontrôleur 34 constituent un moyen de comptage. Enfin, le dispositif comporte un dispositif d'émission 36 permettant de transmettre vers l'extérieur des données caractéristiques du nombre d'impulsions comptées par le microcontrôleur 34. L'électronique contient une pile 37.

Les dimensions du boîtier sont d'environ 50 mm x 20 mm. La hauteur totale du dispositif est d'environ 20 mm et son poids de l'ordre de 20 g.

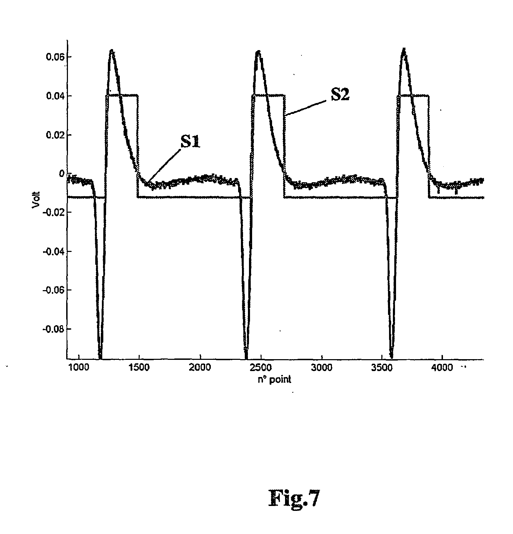

La figure 7 représente des signaux S1 et S2 délivrés par le dispositif selon l'invention sur trois tours de roue dans des conditions de test suivantes : pression de gonflage 6 bars, chargé 35000 N et vitesse 10 km/h, pneumatique 315/80 R 22.5 (pneumatique pour véhicule poids lourd). Le signal S1 est le signal de sortie de l'amplificateur 26 et le signal S2 est le signal de sortie du comparateur 30.

On constate que le passage dans l'aire de contact se traduit en sortie de l'amplificateur 26 par un premier pic d'amplitude négative suivi d'un second d'amplitude positive. En sortie de l'interpréteur, les signaux ne comprennent qu'une seule impulsion (S2) correspondant à chaque tour de roue.

Un essai a été effectué avec un tel dispositif collé à la surface intérieure du bourrelet d'un pneumatique monté sur l'essieu moteur d'un véhicule porteur MAN 14. Le kilométrage mesuré correspond au kilométrage parcouru dans une fourchette de 5%. L'information kilométrage est obtenue par une interrogation radio via un lecteur manuel approché du pneumatique, à l'arrêt du véhicule. On peut aussi transmettre les résultats dans la cabine du conducteur et les afficher.

A la figure 5 sont indiquées, en plus de la position dans la zone 10 déjà décrite, deux autres positions possibles pour fixer à la surface du pneumatique 9 un dispositif selon l'invention. La première consiste à fixer le dispositif 1 sur la surface extérieure du pneumatique dans une zone 12, sensiblement à la même hauteur radiale du côté du pneumatique. Il convient de respecter une hauteur minimale supérieure à la hauteur du crochet 13 de la jante du pneumatique pour éviter tout risque d'endommagement au montage ou en roulage. Il est préférable d'ajouter un dispositif de protection du dispositif pour limiter les risques de chocs en roulage. L'avantage de cette position est de faciliter l'entretien et le contrôle du dispositif.

Une autre position est sous le sommet du pneumatique dans une zone 16. Les deux branches du U du dispositif 1 sont alors disposées dans une direction circonférentielle. Les variations de distance entre l'aimant et la bobine sont liées à l'aplatissement du sommet lors du passage dans l'aire de contact.

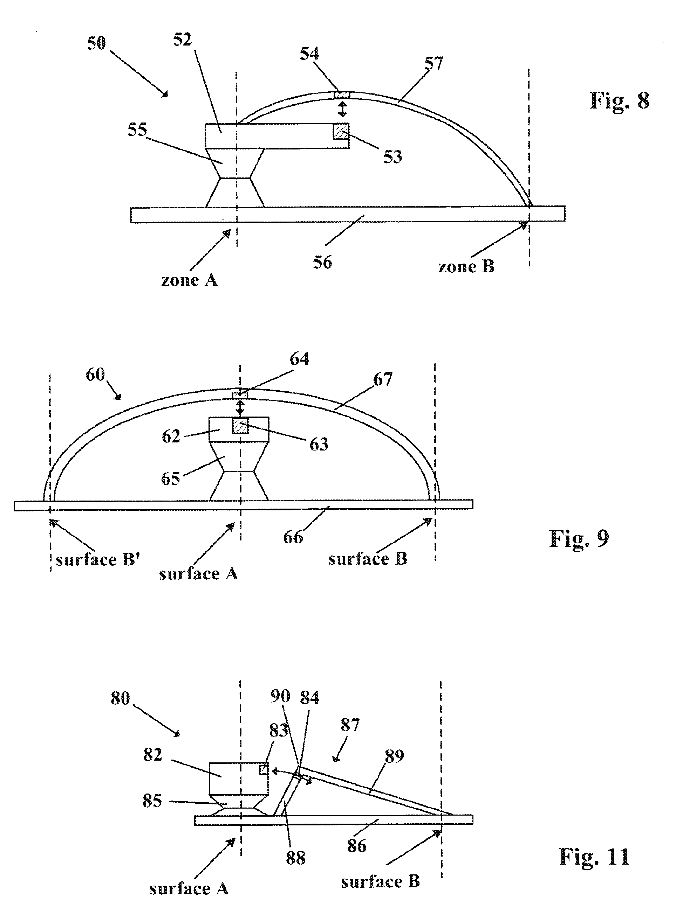

La figure 8 présente un second mode de réalisation d'un dispositif selon l'invention. Dans ce mode de réalisation, le dispositif 50 comprend comme précédemment un boîtier 52, un capteur avec une bobine 53 et un aimant 54, un élément de liaison 55 du boîtier 52, un élément de liaison 57 de l'aimant 54 et une semelle 56. L'élément de liaison 57 est de forme allongée et arquée et s'étend de la surface de la semelle 56 adjacente à la surface B jusqu'à la surface du boîtier 52 du côté opposé à la semelle 56. En conséquence, tout déplacement relatif des surfaces A et B va entraîner un déplacement relatif des aimant et bobine dirigé dans une direction sensiblement perpendiculaire à la direction D. Ce dispositif 50 a l'avantage de permettre d'écarter les surfaces A et B l'une de l'autre et ainsi d'augmenter l'amplitude des mouvements relatifs entre les deux éléments du capteur.

La figure 9 présente un troisième mode de réalisation d'un dispositif selon l'invention. Ce dispositif 60 comprend comme précédemment un boîtier 62, un capteur avec une bobine 63 et un aimant 64, un élément de liaison 65 du boîtier 62, un élément de liaison 67 de l'aimant 64 et une semelle 66. L'élément de liaison 67 est de forme allongée et arquée et s'étend de la surface de la semelle 56 adjacente à la surface B jusqu'à une surface B' disposée symétriquement relativement à la surface B de l'autre côté du boîtier 62. Il en résulte que les mouvements relatifs entre les deux éléments du capteur sont liés aux déplacements relatifs entre les surfaces A et B ainsi que A et B'. Cela permet dans certaines conditions, par exemple lorsque le dispositif 60 est disposé à la surface intérieure du pneumatique sous le sommet, d'augmenter la sensibilité du dispositif de comptage des rotations du pneumatique. Le dispositif est alors de préférence disposé avec la direction D orienté circonférentiellement.

La figure 10 présente un quatrième mode de réalisation d'un dispositif selon l'invention. Dans ce mode de réalisation, le dispositif 70 comprend comme précédemment un boîtier 72, un capteur avec une bobine 73 et un générateur de champ magnétique 74, un élément de liaison 75 du boîtier 72, un élément de liaison 77 du générateur 74 et une semelle 76. L'élément de liaison 77 du générateur 74 sépare ceux-ci de la semelle 76 d'une hauteur moyenne h, telle que ce générateur se trouve en regard de la bobine 73. Le générateur de ce dispositif 70 est constitué d'un ou plusieurs aimants 74 disposés en regard de la bobine 73, mais selon une direction parallèle à la direction D au lieu de perpendiculairement comme précédemment.

Les directions de sensibilité des aimants et de la bobine sont comme précédemment orientés normalement à la direction D. Toute variation de position relative des aimants et de la bobine va aussi entraîner un signal électrique dans la bobine 73.

La figure 11 présente un cinquième mode de réalisation d'un dispositif 80 selon l'invention. Dans ce mode de réalisation, le dispositif 80 comprend comme précédemment un boîtier 82, un capteur avec une bobine 83 et un générateur de champ magnétique 84, un élément de liaison 85 du boîtier 82, un élément de liaison 87 du générateur 84 et une semelle 86. L'élément de liaison 87 du générateur de champ magnétique 84 est constitué de deux branches allongées 88 et 89 avec un point de liaison 90 en forme de L. Le générateur 84 est disposé sensiblement au point de liaison 90, la première branche s'étend du point de liaison 90 jusqu'à une zone de la semelle adjacente sensiblement à la surface A et la seconde branche 89 s'étend du point de liaison 90 jusqu'à la surface B. En conséquence, tout déplacement relatif normal à la direction D des surfaces A et B entraîne un déplacement relatif des capteur passif 83 et générateur de champ magnétique 84 sensiblement parallèle à la direction D.

Les modes de réalisation décrits ci-dessus n'ont été fournis qu'à titre d'exemples non limitatifs et pourront recevoir toutes modifications désirables sans sortir pour cela du cadre de l'invention.

## Revendications

1. Dispositif (1) de comptage des rotations d'un objet qui subit une déformation au cours d'une rotation, comprenant deux parties soumises à un mouvement relatif sous l'effet de la déformation de l'objet **caractérisé en ce que** la première partie comporte un générateur de champ magnétique (6) tandis que la seconde partie comporte un capteur (5) sensible audit champ magnétique **en ce que** des moyens de liaison lient mécaniquement la seconde partie à une première surface A de l'objet et la première partie à une seconde surface B de l'objet, les deux surfaces A et B étant décalées l'une de l'autre, **en ce que** ledit dispositif if comporte un interpréteur (30) qui produit une impulsion chaque fois qu'il a détecté au moins un cycle des signaux produits par le capteur sensible au champ magnétique et un moyen de comptage (32) relié à l'interpréteur.

2. Dispositif selon la revendication 1, **caractérisé en ce que** le capteur (5) est un capteur passif.

3. Dispositif selon la revendication 1 ou 2, **caractérisé en ce que** le générateur de champ magnétique (6) est un aimant.

4. Dispositif selon l'une des revendications 1 à 3, **caractérisé en ce que** l'une des deux parties (5,6) est liée à l'objet par un membre élastique (3).

5. Dispositif selon la revendication 4, **caractérisé en ce que** le membre élastique (3) participe à la définition d'une position de référence du capteur (15) relativement au générateur de champ magnétique (6).

6. Dispositif selon l'une des revendications 1 à 5, dans lequel l'interpréteur (30) comprend un comparateur (30).

7. Dispositif selon la revendication 1 à 6, dans lequel l'interpréteur comprend des moyens (26) d'amplification de signaux.

8. Dispositif selon l'une des revendications 1 à 7, dans lequel le moyen de comptage (22) est un compteur (32) qui, chaque fois qu'il a reçu un nombre prédéterminé d'impulsions de la part de l'interpréteur (30), transmet une impulsion à un microcontrôleur (34) comportant des moyens de stockage du nombre d'impulsions reçues du compteur.

9. Dispositif selon la revendication 8, comprenant des moyens (36) de transmission vers l'extérieur de données caractéristiques du nombre d'impulsions stocké par le microcontrôleur (34).

10. Dispositif selon l'une des revendications 1 à 9, comprenant un système autonome (37) d'alimentation électrique des composants électriques.

11. Dispositif selon l'une quelconque des revendications précédentes, dans lequel l'objet est un pneumatiques (9).

12. Dispositif selon la revendication 11, comprenant :
- un boîtier (2),
- un capteur destiné à générer un signal électrique à chaque tour de roue, et
- des moyens de liaison (34) destinés à relier mécaniquement le boîtier (2) et le capteur à la surface du pneumatique (9),
dans lequel :
- le capteur est constitué
• dudit générateur de champ magnétique (6), et
• dudit capteur (5) sensible au champ magnétique solidaire du boîtier (2) et disposé en regard du générateur de champ magnétique (6),
- les moyens de liaison (3,4) lient mécaniquement le boîtier (2) à une première surface A et le générateur de champ magnétique (6) à une seconde surface B, les deux surfaces A et B étant sensiblement coplanaires et décalées l'une de l'autre dans une direction D d'une distance L donnée, et
- ledit signal électrique est produit par les déplacements relatifs entre ledit générateur de champ magnétique (6) et ledit capteur (5) sensible au champ magnétique.

13. Dispositif selon la revendication 12, dans lequel ledit capteur (5) sensible au champ magnétique est un capteur passif.

14. Dispositif selon la revendication 13, dans lequel ledit capteur passif est une boucle de fil conducteur.

15. Dispositif selon l'une des revendications 12 à 14, dans lequel les moyens de liaison (3,4) sont tels qu'un déplacement relatif normal à la direction D des surfaces A et B entraîne un déplacement relatif des générateur de champ magnétique (6) et passif (5) sensiblement normal à la direction D.

16. Dispositif selon la revendication 15, dans lequel les générateur de champ magnétique (6) et capteur (5) sensible au champ magnétique sont en regard selon une direction normale à la direction D.

17. Dispositif selon la revendication 16, dans lequel les moyens de liaison (3,4), le boîtier (2) et le capteur (5) sensible au champ magnétique sont disposés en forme de L.

18. Dispositif selon la revendication 17, dans lequel les moyens de liaison du boîtier et du capteur comprennent une semelle souple (4) avec une première face destinée à être liée de manière permanente à la surface du pneumatique et au moins un élément de liaison (3) auquel est fixé le boîtier avec un écartement donné relativement à la semelle.

19. Dispositif selon la revendication 18, dans lequel le générateur de champ magnétique (6) est noyé dans la semelle (4).

20. Dispositif selon l'une des revendications 18 et 19, dans lequel le boîtier, l'élément de liaison du boîtier et la semelle ont une forme générale en U.

21. Dispositif selon la revendication 16, dans lequel les moyens de liaison (56,57) du générateur de champ magnétique sont constitués d'un élément de liaison élastique (57), de forme allongée et arquée s'étendant dans la direction D entre la surface B et une zone du boîtier (52) ou de l'élément de liaison (55) du boîtier (52) en regard de la surface A, le générateur de champ magnétique (54) et le capteur (53) sensible au champ magnétique étant disposés en regard entre les deux extrémités dudit élément de liaison (55) du capteur (53).

22. Dispositif selon la revendication 21, dans lequel les moyens de liaison comprennent une semelle souple (56) reliant les surfaces A et B.

23. Dispositif selon la revendication 16, dans lequel les moyens de liaison (66,67) du générateur de champ magnétique (64) sont constitués d'un élément de liaison élastique (67), de forme allongée et arquée s'étendant dans la direction D entre la surface B et une surface B' disposée au-delà de la surface A, le générateur de champ magnétique (64) et le capteur (63) sensible au champ magnétique étant disposés en regard entre les deux extrémités dudit élément de liaison élastique (67) du générateur de champ magnétique.

24. Dispositif selon la revendication 23, dans lequel les moyens de liaison (66,67) comprennent une semelle souple (66) reliant les surfaces A, B et B'.

25. Dispositif selon la revendication 15, dans lequel les générateur de champ magnétique (74) et capteur (73) sensible au champ magnétique sont en regard selon une direction parallèle à la direction D.

26. Dispositif selon la revendication 25, dans lequel les moyens de liaison comprennent un élément de liaison du boîtier (75) écartant ledit boîtier (72) de la surface A d'une hauteur donnée, et un élément de liaison du générateur de champ magnétique (77) écartant ledit générateur de champ magnétique (74) de la surface B d'une hauteur donnée et dans lequel le capteur (73) sensible au champ magnétique est solidaire du boîtier (72) et disposé à une hauteur relativement à la surface A sensiblement identique à la hauteur écartant le générateur de champ magnétique (74) de la surface B.

27. Dispositif selon l'une des revendications 12 à 14, dans lequel les moyens de liaison (85,87,88,89) sont tels qu'un déplacement relatif normal à la direction D des surfaces A et B entraîne un déplacement relatif des capteur (83) sensible au champ magnétique et générateur de champ magnétique (84) sensiblement parallèle à la direction D.

28. Dispositif selon la revendication 27, dans lequel les moyens de liaison (87) du générateur de champ magnétique (84) comprennent deux branches allongées (88,89) avec un point de liaison (90) en forme de L, telles que le générateur (84) est disposé sensiblement audit point de liaison (90), la première branche (88) s'étend du point de liaison jusqu'à une zone adjacente sensiblement à la surface A et la seconde branche (89) s'étend du point de liaison jusqu'à la surface B.

29. Dispositif selon la revendication 28, dans lequel les moyens de liaison comprennent une semelle souple (86) reliant les surfaces A et B.

30. Dispositif selon l'une des revendications 12 à 29, dans lequel la distance L entre les surfaces A et B est supérieure à 20 mm.

31. Dispositif selon l'une des revendications 12 à 30, dans lequel la distance H, séparant à l'état libre, le générateur de champ magnétique et le capteur sensible au champ magnétique est comprise entre 10 et 15 mm.

32. Dispositif selon l'une des revendications 12 à 31, dans lequel ledit générateur de champ magnétique est un mélange caoutchouteux comportant des particules magnétiques.

33. Dispositif selon l'une des revendications 12 à 31, dans lequel ledit générateur de champ magnétique est un aimant permanent de type samarium-cobalt.

34. Dispositif selon l'une des revendications 12 à 33, dans lequel ledit boîtier est un circuit imprimé portant, en plus dudit capteur passif, l'ensemble des moyens d'alimentation électrique et de traitement des signaux.

35. Pneumatique muni d'un dispositif selon l'une quelconque des revendications 1 à 34.

36. Pneumatique selon la revendication 35, dans lequel la surface A de liaison est disposée sur la surface intérieure de l'un des bourrelets dudit pneumatique.

37. Pneumatique selon la revendication 36, dans lequel la surface B est disposée sensiblement radialement extérieurement relativement à ladite surface A.

38. Pneumatique selon l'une des revendications 36 et 37, dans lequel ladite surface A est disposée à une distance, supérieure à 50 mm, de ladite extrémité radiale intérieure de la surface intérieure du pneumatique.

39. Pneumatique selon la revendication 35, dans lequel ledit dispositif est disposé sur la surface intérieure du sommet dudit pneumatique et dans lequel les surfaces A et B sont orientées sensiblement circonférentiellement.

40. Pneumatique selon la revendication 35, dans lequel, ledit pneumatique étant destiné à être monté sur une jante avec des crochets de jante de hauteur donnée, ledit dispositif est disposé sur la surface extérieure de l'un des flancs dudit pneumatique, à une distance radiale supérieure à la hauteur desdits crochets de jante.

## Claims

1. A device (1) for counting the rotations of an object which undergoes deformation in the course of a rotation, comprising two parts subject to relative movement under the effect of the deformation of the object, **characterised in that** the first part includes a magnetic field generator (6), while the second part includes a sensor (5) sensitive to the said magnetic field, **in that** connection means mechanically connect the second part to a first surface A of the object and the the first part to a second surface B of the object, the two surfaces A and B being offset from one another, and **in that** said device comprises an interpreter (30) which emits a pulse each time it detects at least one cycle of signals emitted by the sensor sensitive to the magnetic field and counting means (32) connected to the interpreter.

2. A device according to Claim 1, **characterised in that** the sensor (5) is a passive sensor.

3. A device according to Claim 1 or 2, **characterised in that** the magnetic field generator (6) is a magnet.

4. A device according to one of Claims 1 to 3, **characterised in that** one of the two parts (5, 6) is connected to the object by a resilient member (3).

5. A device according to Claim 4, **characterised in that** the resilient member (3) contributes to defining a reference position of the sensor (5) in relation to the magnetic field generator (6).

6. A device according to one of Claims 1 to 5, in which the interpreter (30) comprises a comparator (30).

7. A device according to one of Claims 1 to 6, in which the interpreter comprises means (26) for amplifying signals.

8. A device according to one of Claims 1 to 7, wherein the counting means (32) is a counter (32) which, each time it receives a predetermined number of pulses from the interpreter (30), transmits a pulse to a microprocessor (34) including means for storing the number of pulses received from the counter.

9. A device according to Claim 8, comprising means (36) for transmitting to the outside data indicating the number of pulses stored by the microprocessor (34).

10. A device according to one of Claims 1 to 9, comprising an autonomous system (37) of electrical power supply to the electrical components.

11. A device according to any one of the previous claims, wherein the objet is a pneumatic tire (9).

12. A device according to claim 11, comprising
- a casing (2),
- a sensor intended to generate an electrical signal on each rotation of the wheel, and
- connection means (3, 4) intended to mechanically connect the casing (2) and the sensor to the surface of the tyre (9),
wherein:
- the sensor comprises
• said magnetic field generator (6), and
• said sensor (5) sensitive to the magnetic field and in one piece with the casing (2), arranged opposite the magnetic field generator (6),
- the connection means (3, 4) mechanically connect the casing (2) to a first surface A and the magnetic field generator (6) to a second surface B, the two surfaces A and B being substantially coplanar and offset from one another in a direction D by a given distance L, and
- the said electrical signal is produced by the relative displacements of the said magnetic field generator (6) and the said sensor (5) sensitive to the magnetic field.

13. A device according to Claim 12, in which the said sensor (5) sensitive to the magnetic field is a passive sensor.

14. A device according to Claim 13, in which the said passive sensor is a loop of conductive wire.

15. A device according to one of Claims 12 to 14, in which the connection means (3, 4) are such that a relative displacement normal to the direction D of the surfaces A and B brings about a relative displacement of the magnetic field generator (6) and the passive sensor (5) substantially normal to the direction D.

16. A device according to Claim 15, in which the magnetic field generator (6) and the sensor (5) sensitive to the magnetic field are arranged in opposition in a direction normal to the direction D.

17. A device according to Claim 16, in which the connection means (3, 4), the casing (2) and the sensor (5) sensitive to the magnetic field are arranged in an L shape.

18. A device according to Claim 17, in which the means for connecting the casing and the sensor comprise a flexible soleplate (4) having a first face intended to be permanently connected to the surface of the tyre and at least one connection element (3) to which the casing is fixed at a given spacing in relation to the soleplate.

19. A device according to Claim 18, in which the magnetic field generator (6) is embedded in the soleplate (4).

20. A device according to one of Claims 18 and 19, in which the casing, the element for connecting the casing and the soleplate are generally U-shaped.

21. A device according to Claim 16, in which the means for connecting (56, 57) the magnetic field generator are in the form of a resilient connection element (57) of arcuate elongate shape extending in the direction D between the surface B and a zone of the casing (52) or element for connecting (55) the casing (52) which is opposite the surface A, the magnetic field generator (54) and the sensor (53) sensitive to the magnetic field being arranged in opposition between the two ends of the said element (55) for connecting the sensor (53).

22. A device according to Claim 21, in which the connection means comprise a flexible soleplate (56) connecting the surfaces A and B.

23. A device according to Claim 16, in which the means for connecting (66, 67) the magnetic field generator (64) are in the form of a resilient connection element (67) of arcuate elongate shape extending in the direction D between the surface B and a surface B' arranged beyond the surface A, the magnetic field generator (64) and the sensor (63) sensitive to the magnetic field being arranged in opposition between the two ends of the said resilent connection element (67) of the magnetic field generator.

24. A device according to Claim 23, in which the connection means (66, 67) comprise a flexible soleplate (66) connecting the surfaces A, B and B'.

25. A device according to Claim 15, in which the magnetic field generator (74) and the sensor (73) sensitive to the magnetic field are arranged in opposition in a direction parallel to the direction D.

26. A device according to Claim 25, in which the connection means comprise an element for connecting the casing (75) separating the said casing (72) from the surface A by a given height and an element connecting the magnetic field generator (77) separating the said magnetic field generator (74) from the surface B by a given height, and in which the sensor (73) sensitive to the magnetic field is in one piece with the casing (72) and is arranged at a height in relation to the surface A which is substantially identical to the height separating the magnetic field generator (74) from the surface B.

27. A device according to one of Claims 12 to 14, in which the connection means (85, 87, 88, 89) are such that a relative displacement normal to the direction D of the surfaces A and B brings about a relative displacement of the sensor (83) sensitive to the magnetic field and the magnetic field generator (84) substantially parallel to the direction D.

28. A device according to Claim 27, in which the means for connecting (87) the magnetic field generator (84) comprise two elongate arms (88, 89) with a connection point (90) in an L shape, such that the generator (84) is arranged substantially at the said connection point (90), the first arm (88) extends from the connection point to an adjoining zone substantially on the surface A and the second arm (89) extends from the connection point to the surface B.

29. A device according to Claim 28, in which the connection means comprise a flexible soleplate (86) connecting the surfaces A and B.

30. A device according to one of Claims 12 to 29, in which the distance L between the surface A and the surface B is greater than 20 mm.

31. A device according to one of Claims 12 to 30, in which the distance H separating the magnetic field generator and the sensor sensitive to the magnetic field is between 10 and 15 mm in the free state.

32. A device according to one of Claims 12 to 31, in which the said magnetic field generator is a rubber mix including magnetic particles.

33. A device according to one of Claims 12 to 31, in which the said magnetic field generator is a permanent magnet of the samarium-cobalt type.

34. A device according to one of Claims 12 to 33, in which the said casing is a printed circuit carrying, in addition to the said passive sensor, all the means for electrical power supply and signal processing.

35. A tyre equipped with a device according to any one of Claims 1 to 34.

36. A tyre according to Claim 35, in which the connection surface A is arranged on the inner surface of one of the beads of the said tyre.

37. A tyre according to Claim 36, in which the surface B is arranged substantially radially outwards in relation to the said surface A.

38. A tyre according to one of Claims 36 and 37, in which the said surface A is arranged at a spacing greater than 50 mm from the said radially inward end of the inner surface of the tyre.

39. A tyre according to Claim 35, in which the said device is arranged on the inner surface of the crown of the said tyre, and in which the surfaces A and B are oriented substantially in the circumferential direction.

40. A tyre according to Claim 34, in which the said tyre is intended to be mounted on a rim having rim hooks of given height and the said device is arranged on the outer surface of one of the sidewalls of the said tyre, at a radial distance greater than the height of the said rim hooks.

## Patentansprüche

1. Vorrichtung (1) zum Zählen der Drehungen eines während einer Drehung eine Verformung erfahrenden Gegenstands, die zwei Teile enthält, welche unter der Wirkung der Verformung des Gegenstands einer relativen Bewegung unterworfen sind, **dadurch gekennzeichnet, dass** der erste Teil einen Magnetfeldgenerator (6) aufweist, während der zweite Teil einen auf das Magnetfeld ansprechenden Sensor (5) aufweist, dass Verbindungseinrichtungen den zweiten Teil mechanisch mit einer ersten Fläche A des Gegenstands und den ersten Teil mit einer zweiten Fläche B des Gegenstands verbinden, wobei die zwei Flächen A und B zueinander versetzt sind, und dass die Vorrichtung einen Interpreter (30), der jedes Mal dann einen Impuls erzeugt, wenn er mindestens einen Zyklus der von dem auf das Magnetfeld ansprechenden Sensor erzeugten Signale erfasst hat, und eine mit dem Interpreter verbundene Zähleinrichtung (32) aufweist.

2. Vorrichtung nach Anspruch 1, **dadurch gekennzeichnet, dass** der Sensor (5) ein passiver Sensor ist.

3. Vorrichtung nach Anspruch 1 oder 2, **dadurch gekennzeichnet, dass** der Magnetfeldgenerator (6) ein Magnet ist.

4. Vorrichtung nach einem der Ansprüche 1 bis 3, **dadurch gekennzeichnet, dass** einer der zwei Teile (5, 6) über ein elastisches Glied (3) mit dem Gegenstand verbunden ist.

5. Vorrichtung nach Anspruch 4, **dadurch gekennzeichnet, dass** das elastische Glied (3) an der Definition einer Bezugsstellung des Sensors (5) bezüglich des Magnetfeldgenerators (6) mitwirkt.

6. Vorrichtung nach einem der Ansprüche 1 bis 5, bei der der Interpreter (30) einen Komparator (30) enthält.

7. Vorrichtung nach Anspruch 1 bis 6, bei der der Interpreter Einrichtungen (26) zur Signalverstärkung enthält.

8. Vorrichtung nach einem der Ansprüche 1 bis 7, bei der die Zähleinrichtung (32) ein Zähler (32) ist, der jedes Mal, wenn er eine vorbestimmte Anzahl von Impulsen vom Interpreter (30) empfangen hat, einen Impuls an einen Mikrocontroller (34) überträgt, der Einrichtungen zum Speichern der vom Zähler empfangenen Anzahl von Impulsen aufweist.

9. Vorrichtung nach Anspruch 8, die Einrichtungen (36) zur Übertragung von charakteristischen Daten der Anzahl von vom Mikrocontroller (34) gespeicherten Impulsen nach außen enthält.

10. Vorrichtung nach einem der Ansprüche 1 bis 9, die ein autonomes System (37) zur Stromversorgung der elektrischen Bauteile enthält.

11. Vorrichtung nach einem der vorhergehenden Ansprüche, bei der der Gegenstand ein Luftreifen (9) ist.

12. Vorrichtung nach Anspruch 11, die enthält:
- ein Gehäuse (2),
- einen Sensor, der dazu bestimmt ist, bei jeder Radumdrehung ein elektrisches Signal zu erzeugen, und
- Verbindungseinrichtungen (3, 4), die dazu bestimmt sind, das Gehäuse (2) und den Sensor mechanisch mit der Fläche des Luftreifens (9) zu verbinden,
bei der:
- der Sensor besteht aus
• dem Magnetfeldgenerator (6), und
• dem auf das Magnetfeld ansprechenden Sensor (5), der fest mit dem Gehäuse (2) verbunden und gegenüber dem Magnetfeldgenerator (6) angeordnet ist,
- die Verbindungseinrichtungen (3, 4) mechanisch das Gehäuse (2) mit einer ersten Fläche A und den Magnetfeldgenerator (6) mit einer zweiten Fläche B verbinden, wobei die zwei Flächen A und B im Wesentlichen koplanar und in einer Richtung D um eine gegebene Entfernung L zueinander versetzt sind, und
- das elektrische Signal von den relativen Verschiebungen zwischen dem Magnetfeldgenerator (6) und dem auf das Magnetfeld ansprechenden Sensor (5) erzeugt wird.

13. Vorrichtung nach Anspruch 12, bei der der auf das Magnetfeld ansprechende Sensor (5) ein passiver Sensor ist.

14. Vorrichtung nach Anspruch 13, bei der der passive Sensor eine Leitungsdrahtschleife ist.

15. Vorrichtung nach einem der Ansprüche 12 bis 14, bei der die Verbindungseinrichtungen (3, 4) derart sind, dass eine relative Verschiebung senkrecht zur Richtung D der Flächen A und B zu einer relativen Verschiebung des Magnetfeldgenerators (6) und des passiven Sensors (5) im Wesentlichen senkrecht zur Richtung D führt.

16. Vorrichtung nach Anspruch 15, bei der der Magnetfeldgenerator (6) und der auf das Magnetfeld ansprechende Sensor (5) einander gemäß einer Richtung senkrecht zur Richtung D gegenüber liegen.

17. Vorrichtung nach Anspruch 16, bei der die Verbindungseinrichtungen (3, 4), das Gehäuse (2) und der auf das Magnetfeld ansprechende Sensor (5) L-förmig angeordnet sind.

18. Vorrichtung nach Anspruch 17, bei der die Verbindungseinrichtungen des Gehäuses und des Sensors eine biegsame Grundplatte (4) mit einer ersten Seite, die dazu bestimmt ist, dauerhaft mit der Fläche des Luftreifens verbunden zu werden, und mindestens ein Verbindungselement (3) enthalten, an dem das Gehäuse mit einem gegebenen Abstand zur Grundplatte befestigt ist.

19. Vorrichtung nach Anspruch 18, bei der der Magnetfeldgenerator (6) in die Grundplatte (4) eingebettet ist.

20. Vorrichtung nach einem der Ansprüche 18 und 19, bei der das Gehäuse, das Verbindungselement des Gehäuses und die Grundplatte eine allgemeine U-Form haben.

21. Vorrichtung nach Anspruch 16, bei der die Verbindungseinrichtungen (56, 57) des Magnetfeldgenerators aus einem elastischen Verbindungselement (57) länglicher und gewölbter Form bestehen, das sich in der Richtung D zwischen der Fläche B und einer Zone des Gehäuses (52) oder des Verbindungselements (55) des Gehäuses (52) gegenüber der Fläche A erstreckt, wobei der Magnetfeldgenerator (54) und der auf das Magnetfeld ansprechende Sensor (53) zwischen den zwei Enden des Verbindungselements (55) des Sensors (53) einander gegenüber angeordnet sind.

22. Vorrichtung nach Anspruch 21, bei der die Verbindungseinrichtungen eine biegsame Grundplatte (56) enthalten, die die Flächen A und B verbindet.

23. Vorrichtung nach Anspruch 16, bei der die Verbindungseinrichtungen (66, 67) des Magnetfeldgenerators (64) aus einem elastischen Verbindungselement (67) länglicher und gewölbter Form bestehen, das sich in der Richtung D zwischen der Fläche B und einer Fläche B' erstreckt, die jenseits der Fläche A angeordnet ist, wobei der Magnetfeldgenerator (64) und der auf das Magnetfeld ansprechende Sensor (63) zwischen den zwei Enden des elastischen Verbindungselements (67) des Magnetfeldgenerators einander gegenüber angeordnet sind.

24. Vorrichtung nach Anspruch 23, bei der die Verbindungseinrichtungen (66, 67) eine biegsame Grundplatte (66) enthalten, die die Flächen A, B und B' verbindet.

25. Vorrichtung nach Anspruch 15, bei der der Magnetfeldgenerator (74) und der auf das Magnetfeld ansprechende Sensor (73) einander gemäß einer Richtung parallel zur Richtung D gegenüberliegen.

26. Vorrichtung nach Anspruch 25, bei der die Verbindungseinrichtungen ein Verbindungselement (75) des Gehäuses, das das Gehäuse (72) von der Fläche A um eine gegebene Höhe entfernt, und ein Verbindungselement (77) des Magnetfeldgenerators enthalten, das den Magnetfeldgenerator (74) von der Fläche B um eine gegebene Höhe entfernt, und bei der der auf das Magnetfeld ansprechende Sensor (73) fest mit dem Gehäuse (72) verbunden und in einer Höhe bezüglich der Fläche A im Wesentlichen gleich der Höhe angeordnet ist, die den Magnetfeldgenerator (74) von der Fläche B entfernt.

27. Vorrichtung nach einem der Ansprüche 12 bis 14, bei der die Verbindungseinrichtungen (85, 87, 88, 89) so sind, dass eine relative Verschiebung der Flächen A und B senkrecht zur Richtung D zu einer relativen Verschiebung des auf das Magnetfeld ansprechenden Sensors (83) und des Magnetfeldgenerators (84) im Wesentlichen parallel zur Richtung D führt.

28. Vorrichtung nach Anspruch 27, bei der die Verbindungseinrichtungen (87) des Magnetfeldgenerators (84) zwei längliche Zweige (88, 89) mit einem Verbindungspunkt (90) in Form eines L enthalten, derart, dass der Generator (84) im Wesentlichen am Verbindungspunkt (90) angeordnet ist, wobei der erste Zweig (88) sich vom Verbindungspunkt bis zu einer Zone im Wesentlichen an die Fläche A angrenzend erstreckt, und der zweite Zweig (89) sich vom Verbindungspunkt bis zur Fläche B erstreckt.

29. Vorrichtung nach Anspruch 28, bei der die Verbindungseinrichtungen eine biegsame Grundplatte (86) enthalten, die die Flächen A und B verbindet.

30. Vorrichtung nach einem der Ansprüche 12 bis 29, bei der die Entfernung L zwischen den Flächen A und B größer als 20 mm ist.

31. Vorrichtung nach einem der Ansprüche 12 bis 30, bei der die Entfernung H, die im freien Zustand den Magnetfeldgenerator und den auf das Magnetfeld ansprechenden Sensor trennt, im Wesentlichen zwischen 10 und 15 mm liegt.

32. Vorrichtung nach einem der Ansprüche 12 bis 31, bei der der Magnetfeldgenerator eine Kautschukmischung ist, die Magnetteilchen enthält.

33. Vorrichtung nach einem der Ansprüche 12 bis 31, bei der der Magnetfeldgenerator ein Dauermagnet vom Typ Samarium-Kobalt ist.

34. Vorrichtung nach einem der Ansprüche 12 bis 33, bei der das Gehäuse eine gedruckte Schaltung ist, die außer dem passiven Sensor die Gesamtheit der Stromversorgungseinrichtungen und der Signalverarbeitungseinrichtungen trägt.

35. Luftreifen, der mit einer Vorrichtung nach einem der Ansprüche 1 bis 34 ausgestattet ist.

36. Luftreifen nach Anspruch 35, bei dem die Verbindungsfläche A auf der Innenfläche eines der Wülste des Luftreifens angeordnet ist.

37. Luftreifen nach Anspruch 36, bei dem die Fläche B im Wesentlichen radial außen bezüglich der Fläche A angeordnet ist.

38. Luftreifen nach einem der Ansprüche 36 und 37, bei dem die Fläche A in einer Entfernung von mehr als 50 mm von dem inneren radialen Ende der Innenfläche des Luftreifens angeordnet ist.

39. Luftreifen nach Anspruch 35, bei dem die Vorrichtung auf einer Innenfläche des Scheitels des Luftreifens angeordnet ist, und bei dem die Flächen A und B im Wesentlichen in Umfangsrichtung ausgerichtet sind.

40. Luftreifen nach Anspruch 35, bei dem, wenn der Luftreifen dazu bestimmt ist, auf eine Felge mit Nutpartien gegebener Höhe montiert zu werden, die Vorrichtung auf der Außenfläche einer der Flanken des Luftreifens in einer radialen Entfernung angeordnet ist, die größer ist als die Höhe der Nutpartien.
